(19) Europäisches Patentamt

European Patent Office

Office européen des brevets

(11) Veröffentlichungsnummer: **0 237 928 B1**

(12) # EUROPÄISCHE PATENTSCHRIFT

(45) Veröffentlichungstag der Patentschrift: **17.03.93**

(51) Int. Cl.⁵: **H04N 7/133**

(21) Anmeldenummer: **87103463.3**

(22) Anmeldetag: **10.03.87**

(54) **Verfahren zur Korrektur von blockweise übertragenen diskreten Werten.**

(30) Priorität: **18.03.86 DE 3608914**

(43) Veröffentlichungstag der Anmeldung:
**23.09.87 Patentblatt 87/39**

(45) Bekanntmachung des Hinweises auf die
Patenterteilung:
**17.03.93 Patentblatt 93/11**

(84) Benannte Vertragsstaaten:
**AT BE CH DE ES FR GB GR IT LI LU NL SE**

(56) Entgegenhaltungen:
**EP-A- 0 077 089**
**EP-A- 0 197 527**
**DE-A- 3 309 717**
**DE-A- 3 424 078**

(73) Patentinhaber: **Deutsche Thomson-Brandt GmbH**
**Hermann-Schwer-Strasse 3 Postfach 1307**
**W-7730 Villingen-Schwenningen(DE)**

(72) Erfinder: **Keesen, Heinz-Werner, Dr.-Ing.**
**Tiestestrasse 5**
**W-3000 Hannover 1(DE)**
Erfinder: **Hartnack, Wolfgang, Dipl.-Ing.**
**Saarstrasse 22**
**W-3005 Hemmingen 1(DE)**

(74) Vertreter: **Einsel, Robert, Dipl.-Ing.**
**Deutsche Thomson-Brandt GmbH Patent-**
**und Lizenzabteilung Göttinger Chaussee 76**
**W-3000 Hannover 91 (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services
(3.10/3.5x/3.0.1)

## Beschreibung

Die Erfindung betrifft ein Verfahren zur Korrektur gemäß dem Oberbegriff des Patentanspruchs 1.

Auf den Seiten 114 - 120 der Dissertationsarbeit von 1980 an der TH Aachen, "Adaptive Transformationskodierung von digitalisierten Bildsignalen" von Dipl.-Ing. Wolfgang Mauersberger, ist eine Approximation einer Matrix beschrieben. Es wird wegen der reellwertigen Matrixelemente ein Rechenwerk mit Gleitkommaarithmetik vorgeschlagen. Die Matrixelemente A (I, J) werden approximiert (Seite 115, zweiter Absatz).

In EP-A-0 077 089 wird ein Verfahren zur Transformation mit Hilfe von Matrizenmultiplikationen beschrieben, bei dem eine sich durch die begrenzte Stellenzahl in der Rechnung ergebende Rundung durch eine umkehrbar eindeutige Abbildung von Zahlenbereichen in andere, nicht belegte Zahlenbereiche ausgeglichen wird. Dieses Verfahren eignet sich aber nur für solche speziellen Transformationen, bei denen die Koeffizienten durch Summen- und Differenzbildung von binären Zahlen gebildet werden können, wobei jeweils zwei gerade oder zwei ungerade Ergebnisse entstehen müssen.

Es ist die Aufgabe der Erfindung, ein Verfahren zum Ausgleich von Rundungsfehlern bei Matrizenmultiplikationen in allgemeinen Transformationen anzugeben.

Bei einer Transformationscodierung werden Analogsignale digitalisiert und die digitalisierten Signale von einem Zeitbereich in den Frequenzbereich transformiert. Dazu werden die digitalisierten Signale in Matrizen angeordnet. Bei einer Multiplikation von Matrizen werden Matrixelemente spalten- und zeilenweise miteinander multipliziert und die Produkte aufaddiert. Bei der binären Multiplikation ergibt sich die Stellenzahl des Produktes als Summe der Stellenzahlen der Faktoren. Nach mehreren hintereinander durchgeführten Multiplikationen ist mit einfachem Hardwareaufwand in einem Rechner eine Abarbeitung mit allen Stellen nicht mehr zu realisieren. Je nach gewünschter Genauigkeit können Rundungsfehler bei der Multiplikation zugelassen werden, wenn im nachhinein dafür gesorgt wird, daß diese Rundungsfehler wieder ausgeglichen werden.

Zum besseren Verständnis der Erfindung wird nachstehend ein Ausführungsbeispiel anhand von Figuren näher erläutert. Es zeigen

Fig. 1    ein Nachrichtenübertragungssystem,
Fig. 2    einen Quellencoder,
Fig. 3    einen Quellendecoder,
Fig. 4    einen Bildschirm,
Fig. 5    eine Matrix mit transformierten Werten,
Fig. 6    eine Matrizenmultiplikation,
Fig. 7    ein Blockschaltbild für eine inverse diskrete Cosinustransformation,
Fig. 8    eine Korrekturschaltung nach einer diskreten Cosinustransformation.

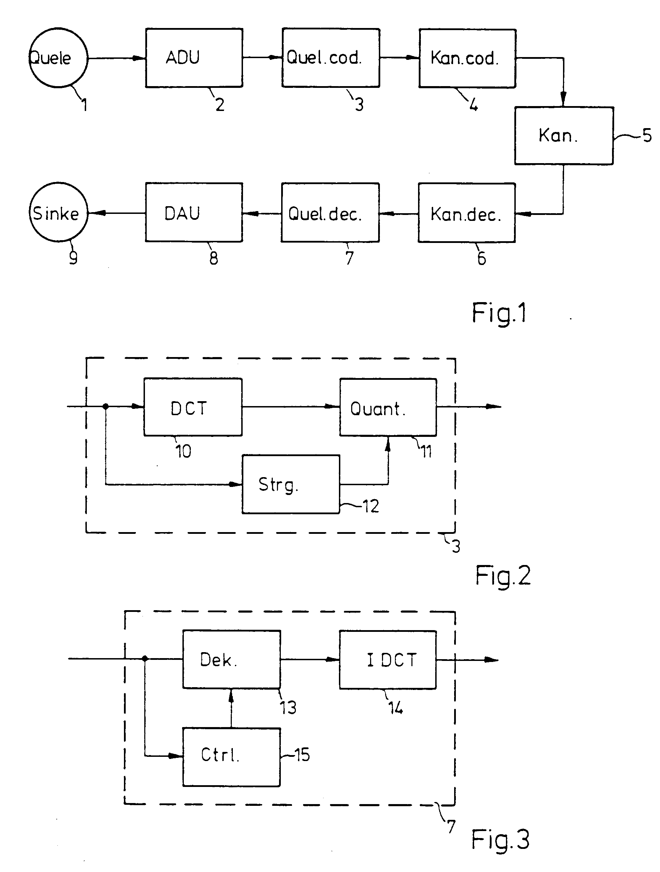

Fig. 1 zeigt eine Nachrichtenquelle 1, einen ADU 2 (Analog-Digital-Umsetzer), einen Quellencoder 3, einen Kanalcoder 4, einen Kanal 5, einen Kanaldecoder 6, einen Quellendecoder 7, einen DAU 8 (Digital-Analog-Umsetzer) und eine Nachrichtensinke 9. Der Kanal 5 kann beispielsweise für eine HF-Übertragungsstrecke oder einen digitalen Videorecorder stehen. Ein digitaler Videorecorder kann aber auch beispielsweise für den ADU 2, den Quellencoder 3, den Kanalcoder 4, den Kanal 5, den Kanaldecoder 6, den Quellendecoder 7 und den DAU 8 stehen. Die Quelle wird dann durch eine HF-Übertragungsstrecke, der Kanal 5 durch ein Magnetband und einen Magnetkopf des Videorecorders gebildet, die Sinke ist ein Fernsehgerät.

Fig. 2 zeigt einen Quellencoder 3 mit einem Diskreten Cosinustransformator 10, einem Quantisierer 11 und einer Steuerung 12. Im Diskreten Cosinustransformator 10 werden blockweise angeordnete diskrete Digitalsignale vom Zeitbereich in den Frequenzbereich transformiert. Das entspricht einer mathematischen Multiplikation von Matrizen. Im Quantisierer 11 werden die in den Frequenzbereich transformierten Werte quantisiert. Quantisierung siehe auch auf den Seiten 29 ff in der Dissertationsarbeit von Mauersberger. Die Steuerung 12 übernimmt das Hinzufügen von Steuer- und Adressenzeichen. Der Ausgang des Quantisierers 11 geht auf den Kanalcoder 4.

Fig. 3 zeigt einen Quellendecoder 7 mit einem Decoder 13, mit einem Inversen Diskreten Cosinustranformator 14 und einem Controler 15. Der Controler 15 sortiert Steuer- und Adressenzeichen aus den ankommenden übertragenen Werten heraus und sorgt dafür, daß der Decoder nur Datenwörter (im Gegensatz zu Steuerwörtern und Adressen) an den Inversen Transformator 14 weitergibt. Der Inverse Transformator 14 transformiert über den Kanal 5 übertragene quantisierte Frequenzwerte in den Zeitbereich.

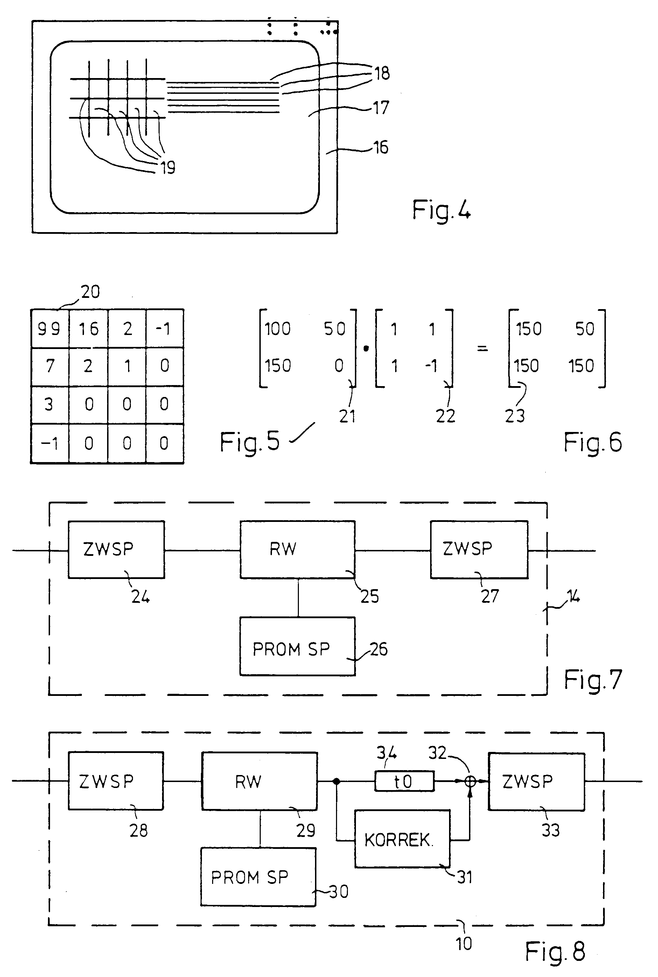

Fig. 4 zeigt ein Fernsehgerät 16 mit einem Bildschirm 17. Auf dem Bildschirm 17 sind Zeilen 18 zu erkennen. Durch jeden Block 19 verlaufen jeweils drei Fernsehzeilen 18. Die Blöcke 19 umfassen eine definierte Anzahl von Bildpunkten und sind quadratisch angeordnet. Die Blöcke 19 umfassen in diesem Beispiel einen Block mit 3 X 3 Bildpunkten. In der Praxis wird mit einem Block von 8 X 8 Bildpunkten gearbeitet. Die Grau- bzw. Farbwerte der Bildpunkte in den Blöcken bilden die Elemente der Matrizen des Bildbereiches.

Fig. 5 zeigt eine 4 X 4 Matrix mit in den Frequenzbereich transformierten Werten, die Koeffizientenmatrix. Der Matrixwert 20, der in der ersten Zeile und der ersten Spalte angeordnet ist, d.h. das Element K(1,1) ist ein Maß für den Gleichanteil, im folgenden Mittelwert genannt, eines Blockes.

Fig. 6 zeigt eine mathematische Gleichung mit Matrizen, wobei die Matrizen 21 und 22 miteinander multipliziert werden und die Matrix 23 ergeben.

Fig. 7 zeigt den Inversen Diskreten Cosinustransformator 14, in dem Frequenzwerte in den Zeitbereich rücktransformiert werden. Die Frequenzbereichswerte werden im Zwischenspeicher 24 zwischengespeichert und dem Rechenwerk 25 zugeführt. Im Rechenwerk 25 werden die blockweise in Matrizenform angeordneten Frequenzbereichswerte in den Bildbereich rücktransformiert. Dazu greift das Rechenwerk 25 auf das PROM 26 zurück und ruft dort die gespeicherten Matrizen ab. Die Bildung solcher Matrizen für eine Diskrete Transformation oder Diskrete Cosinustranformation (DCT) sind z.B. erklärt (auf den Seiten 20 - 25) in der Dissertationsarbeit "Ein Beitrag zur Informationsreduktion bei Fernsehbildsignalen mit Transformationscodierung und adaptiver Quantisierung" von Robert Sell, 1979 an der Gesamthochschule Wuppertal. Die Funktionsweise von Rechenwerken ist erklärt im TTL Kochbuch von Texas Instruments, z.B. Seite 226 - 228. Der Zwischenspeicher 27 nimmt die in den Bildbereich transformierten Grau- bzw. Farbwerte auf und gibt sie an einen Monitor bzw. ein Fernsehgerät weiter.

Fig. 8 zeigt den Diskreten Cosinustransformator 10, bei dem Bildbereichswerte in den Frequenzbereich transformiert werden. Bildbereichswerte werden im Zwischenspeicher 28 zwischengespeichert und von dort aus dem Rechenwerk 29 zugeführt. Das Rechenwerk 29 greift auf den weiteren PROM-Speicher 30 zurück und wird vom PROM 30 mit Matrixelementen versorgt. Das Rechenwerk 29 multipliziert Matrizen miteinander und erzeugt so aus Bildbereichswerten Frequenzbereichswerte, im folgenden Koeffizienten genannt. Die blockweise angeordneten Koeffizienten werden über eine Additionsschaltung 32 zum Zwischenspeicher 33 weitergegeben. Bei einer Transformation, z.B. DCT, wird folgende Rechnung durchgeführt:

$$(K) = (DCT) * (B) * (DCT)^{-1}$$

Bei einer Rücktransformation bzw. Inversen Transformation wird wie folgt gerechnet:

$$(B) = (DCT)^{-1} * (K) * (DCT)$$

mit

| | |
|---|---|
| (B) | = Bildelementmatrix |
| (K) | = Koeffizientenmatrix |
| (DCT) | = Transformationsmatrix |
| $(DCT)^{-1}$ | = inverse Transformationsmatrix |

Um das Rechenwerk 29 möglichst einfach zu gestalten, wird dort mit Integer-Zahlen gerechnet. Mikroprozessoren oder Rechenwerke arbeiten im allgemeinen mit 2 exp n Stellenzahlen, in der Regel mit acht oder sechzehn Bit. Bildbereichswerte und Frequenzbereichswerte werden vorteilhaft von reellen Zahlenwerten auf Integer-Zahlen, das sind natürliche Zahlen mit positivem und negativem Vorzeichen und dem Zahlenwert Null, zugeschnitten, das heißt mit einem beliebigen, aber definierten Faktor multipliziert, um Kommata auszuschließen.

Weil sich bei den vier Matrizenmultiplikationen die Stellenzahl für die Produkte erhöht, das heißt, daß nach einer Multiplikation jeweils einige Bit mehr im Rechenwerk erforderlich werden, und weil das Rechenwerk mit möglichst geringer Wortbreite, z.B. mit 8 oder 16 Bit, auskommen soll, wird nach einigen oder nach allen Multiplikationen gerundet, bzw. die Stellenzahl zwangsweise begrenzt. Im allgemeinen wird durch Weglassen der letzten Stellen abwärts gerundet, weil sich dies ohne zusätzlichen Aufwand ergibt. Dadurch wird aber die Amplitude der Bildelemente, insbesondere die des Mittelwertes (Element K(1,1) in der Koeffizientenmatrix), im Verlauf der Berechnung immer geringer im Vergleich zu einer Berechnung ohne Rundung.

Die Korrekturschaltung 31, die den Mittelwert weitgehend korrigiert, verhindert eine zu geringe Amplitude. In der Praxis hat sich herausgestellt, daß es ausreicht, nur zum Mittelwert der Koeffizientenmatrix einen Korrekturwert zu addieren. Der Korrekturwert MK wird aus folgenden Zahlen berechnet:

- dem Element K(1,1) der Koeffizientenmatrix selbst,
- der Anzahl N der Bits, die im Rechenwerk für die maximale Wortlänge zur Verfügung stehen,
- der Anzahl T der Bits, die im PROM 30 als maximale Wortlänge für die Transformationsmatrixelemente (DCT) gespeichert ist,
- der Anzahl D der Bits, die sich aus der Zeilen- (x) und Spaltenlänge (y) der Bildelementmatrix (x und y) ergibt.

Die Bildelementmatrix kann 1-dimensional sein (x = 1 oder y = 1), sie kann 2-dimensional quadratisch sein (x = y, $\geq$ 2) oder sie kann 2-dimensional variabel sein (x $\neq$ y, x $\geq$ 2, y $\geq$ 2).

Mit

$$D = int (\log_2 (2 * (max (x,y)) -1))$$

ergibt sich der Korrekturwert zu

$$MK = K(1,1) + K(1,1) / (2 exp (N-T-D + 1))$$

bei der eindimensionalen und bei der quadratischen zweidimensionalen Matrix und zu

$$MK = K(1,1) + K(1,1) / (2 \exp (N-T-D))$$

bei der zweidimensionalen Matrix mit unterschiedlicher Länge von Spalten und Zeilen.

Das Element $K(1,1)$ einer Frequenzbereichsmatrix steht für den Gleichanteil und stellt damit ein maß für die Helligkeit eines Blockes dar. Für diesen Gleichanteil wird in der Korrekturschaltung 31 der Korrekturwert MK berechnet und in der Additionsschaltung 32 werden Gleichanteil und Korrekturwert addiert und die Summe aus beiden wird dem Zwischenspeicher 33 zugeführt. Ein Verzögerungsglied 34 verzögert den Mittelwert und alle übrigen Koeffizienten um die Zeit t0, die notwendig ist, um zu dem Mittelwert den Korrekturwert MK zu berechnen. Die Korrekturschaltung ist gemäß den Gleichungen für MK aus Rechenwerken aufgebaut, die im TTL-Kochbuch beschrieben sind. Potenzieren heißt, in einem Register einen Wert zu shiften. D und der Faktor $(2 \exp (N-T-D+1))$ bzw. der Faktor $(2 \exp (N-T-D))$ werden nicht in der Korrekturschaltung 31 berechnet sondern sind als definierte Größen durch die zur Anwendung kommenden Matrizen bestimmt.

**Patentansprüche**

1. Verfahren zur Korrektur von blockweise durch eine oder mehrere Matrixmultiplikationen (Fig. 6) gebildeten diskreten Werten, bei dem die sich bei diesen Matrixmultiplikationen normalerweise ergebende maximale Stellenzahl der gebildeten Werte auf eine festgelegte, niedrigere Stellenzahl (N) durch die zur Matrixmultiplikation verwendeten Schaltungen (25, 29) begrenzt wird, wobei mindestens eine der beteiligten Matrizen festgelegte Koeffizienten (DCT, 26, 30) enthält, **dadurch gekennzeichnet,** daß jeweils aus einem bei der Matrixmultiplikation gebildeten Element (20), welches einen Gleichanteil der zugehörigen Elemente der Matrix darstellt, ein Korrekturwert (MK) gebildet und zu diesem Element hinzuaddiert wird, wobei zur Berechnung dieses Korrekturwerts (MK) zusätzlich die durch die Schaltungen (25, 29) festgelegte Stellenzahl (N), die maximale Stellenzahl (T) der festgelegten Koeffizienten und ein sich aus der maximalen Länge der Spalten oder Zeilen der Eingangssignal-Matrix ergebender Wert (D) verwendet wird.

2. Verfahren nach Anspruch 1, **dadurch gekennzeichnet,** daß der sich aus der maximalen Länge der Spalten oder Zeilen der Eingangssignal-Matrix ergebende Wert (D) folgendermaßen berechnet wird:

$$D = \text{int} (\log_2 [2^* \max(x,y)-1]),$$

wobei x die Länge der Zeilen und y die Länge der Spalten ist.

3. Verfahren nach Anspruch 1 oder 2, **dadurch gekennzeichnet,** daß der Korrekturwert (MK) bei eindimensionaler Matrix oder bei quadratischer Eingangssignal-Matrix folgendermaßen berechnet wird:

$$MK = K(1,1) / 2^{(N-T-D+1)},$$

wobei $K(1,1)$ der Gleichanteil und N die durch die Schaltungen (25, 29) festgelegte Stellenzahl und T die maximale Stellenzahl der festgelegten Koeffizienten ist.

4. Verfahren nach Anspruch 1 oder 2, **dadurch gekennzeichnet,** daß der Korrekturwert (MK) bei zweidimensionaler, nicht quadratischer Eingangssignal-Matrix folgendermaßen berechnet wird:

$$MK = K(1,1) / 2^{(N-T-D)},$$

wobei $K(1,1)$ der Gleichanteil und N die durch die Schaltungen (25, 29) festgelegte Stellenzahl und T die maximale Stellenzahl der festgelegten Koeffizienten ist.

5. Verfahren nach einem oder mehreren der Ansprüche 2 bis 4, **dadurch gekennzeichnet,** daß die Werte für D und/oder $2^{(N-T-D+1)}$ und/oder $2^{(N-T-D)}$ gespeichert oder verdrahtet sind.

6. Verfahren nach einem oder mehreren der Ansprüche 1 bis 5, **dadurch gekennzeichnet,** daß die Eingangssignal-Matrix Grau- und/oder Farbwerte eines Videosignals enthält.

7. Schaltung für ein Verfahren nach einem oder mehreren der Ansprüche 1 bis 6, versehen mit einem Rechenwerk (29) zur Matrixmultiplikation, mit an das Rechenwerk (29) angeschlossenen Lese-Speichermitteln (30), die die festgelegten Koeffizienten enthalten, mit einer dem Rechenwerk (29) nachgeordneten Korrekturschaltung (31), die jeweils einen Korrekturwert (MK) nach Anspruch 3 oder 4 berechnet und in einer Additionsschaltung (32) zu dem entsprechenden Gleichanteil hinzuaddiert.

## Claims

1. Method for the correction of discrete values formed blockwise by one or more matrix multiplications (Fig. 6) in which the maximum number of places of the formed values normally resulting from these multiplications is limited to a predetermined lower number of places (N) by the circuits (25, 29) used for the matrix multiplication, wherein at least one of the matrices involved contains predetermined coefficients (DCT, 26, 30), characterised in that, a correcting value (MK) is formed from an element (20) formed by the matrix multiplication which represents a dc coefficient of the appertaining elements of the matrix and is added to this element, wherein in addition, for the calculation of this correcting value (MK), the number of places (N) predetermined by the circuits (25, 29), the maximum number of places (T) of the predetermined coefficients and a value (D) resulting from the maximum length of the columns or rows of the input signal matrix is used.

2. Method in accordance with claim 1, characterised in that, the value (D) resulting from the maximum length of the columns or rows of the input signal matrix is calculated in the following manner:

$$D = int (log_2[2^*max(x,y)-1]),$$

wherein x is the length of the rows and y the length of the columns.

3. Method in accordance with claim 1 or 2, characterised in that, for a one dimensional matrix or for a quadratic input signal matrix, the correcting value (MK) is calculated in the following manner:

$$MK = K(1,1) / 2^{(N-T-D+1)},$$

wherein K(1,1) is the dc coefficient and N the number of places predetermined by the circuits (25, 29) and T the maximum number of places of the predetermined coefficients.

4. Method in accordance with claim 1 or 2, characterised in that, for a two dimensional non-quadratic input signal matrix, the correcting value (MK) is calculated in the following manner:

$$MK = K(1,1) / 2^{(N-T-D)},$$

wherein K(1,1) is the dc coefficient and N the number of places predetermined by the circuits (25, 29) and T the maximum number of places of the predetermined coefficients.

5. Method in accordance with one or more of claims 2 to 4, characterised in that, the values for D and/or $2^{(N-T-D+1)}$ and/or $2^{(N-T-D)}$ are stored or hard wired-in.

6. Method in accordance with one or more of claims 1 to 5, characterised in that, the input signal matrix contains grey and/or colour values of a video signal.

7. Circuit for a method in accordance with one or more of claims 1 to 6, provided with an arithmetical processor (29) for the matrix multiplications, with read-store means (30) which contain the predetermined coefficients connected to the arithmetical processor (29), with a correcting circuit (31) arranged after the arithmetical processor (29) which each time calculates a correcting value (MK) in accordance with claim 3 or 4 and adds to the corresponding dc coefficient in a summing circuit (32).

## Revendications

1. Procédé pour la correction de valeurs discrètes formées par blocs par une ou plusieurs multiplications de matrices (fig. 6) dans lequel le nombre maximal de chiffres des valeurs formées, qui résulte normalement de ces multiplications de matrices, est limité à un nombre fixé faible de chiffres (N) par les circuits (25, 29) utilisés pour la multiplication de matrices, au moins l'une des matrices participantes contenant des coefficients fixés (DCT, 26, 30), **caractérisé en ce** qu'une valeur de correction (MK) est formée à partir de chaque élément (20) formé lors de la multiplication de matrices qui représente une portion continue des éléments correspondants et que cette valeur est ajoutée à cet élément, le nombre de chiffres (N) fixé par les circuits (25, 29), le nombre maximal de chiffres (T) des coefficients fixés et une valeur (D) qui résulte de la longueur maximale des colonnes ou des lignes de la matrice du signal d'entrée étant utilisés en plus pour le calcul de cette valeur de correction (MK).

2. Procédé selon la revendication 1, **caractérisé en ce** que la valeur (D) qui résulte de la longueur maximale des colonnes ou des lignes de la matrice du signal d'entrée est calculée de la manière suivante :

$D = \text{int} (\log_2 [2^*\max(x,y)-1])$,

x étant la longueur des lignes et y la longueur des colonnes.

3. Procédé selon la revendication 1 ou 2, **caractérisé en ce** que la valeur de correction (MK) pour une matrice unidimensionnelle ou pour une matrice de signal d'entrée carré est calculée de la manière suivante :

$MK = K(1,1)/2^{(N-T-D+1)}$,

K(1,1) étant la portion continue et N le nombre de chiffres fixé par les circuits (25, 29) et T le nombre maximal de chiffres des coefficients fixés.

4. Procédé selon la revendication 1 ou 2, **caractérisé en ce** que la valeur de correction (MK) pour une matrice de signal d'entrée bidimensionnel non carré est calculée de la manière suivante :

$MK = K1,1) /2^{(N-T-D)}$,

K(1,1) étant la portion continue et N le nombre de chiffres fixé par les circuits (25, 29) et T le nombre maximal de chiffres des coefficients fixés.

5. Procédé selon l'une ou plusieurs des revendications 2 à 4, **caractérisé en ce** que les valeurs pour D et/ou $2^{(N-T-D+1)}$ et/ou $2^{(N-T-D)}$ sont mémorisées ou câblées.

6. Procédé selon l'une ou plusieurs des revendications 1 à 5, **caractérisé en ce** que la matrice de signal d'entrée contient des valeurs de gris et/ou de couleur d'un signal vidéo.

7. Circuit pour un procédé selon l'une ou plusieurs des revendications 1 à 6, équipé d'une unité de calcul (29) pour la multiplication de matrices, de moyens de mémorisation et de lecture (30) raccordés à l'unité de calcul (29) qui contiennent les coefficients fixés, d'un circuit de correction (31) placé derrière l'unité de calcul (29) qui calcule respectivement une valeur de correction (MK) selon la revendication 3 ou 4 et qui l'ajoute dans un circuit addeur (32) à la portion continue correspondante.

Fig.1

Fig.2

Fig.3

Fig.4

$$\begin{bmatrix} 100 & 50 \\ 150 & 0 \end{bmatrix} \cdot \begin{bmatrix} 1 & 1 \\ 1 & -1 \end{bmatrix} = \begin{bmatrix} 150 & 50 \\ 150 & 150 \end{bmatrix}$$

| 99 | 16 | 2 | -1 |
|----|----|---|----|
| 7 | 2 | 1 | 0 |
| 3 | 0 | 0 | 0 |
| -1 | 0 | 0 | 0 |

Fig.5

Fig.6

Fig.7

Fig. 8